# EUROPÄISCHE PATENTSCHRIFT

(11) **EP 2 574 863 B1**
(45) Veröffentlichungstag und Bekanntmachung des Hinweises auf die Patenterteilung: **23.04.2014**
(21) Anmeldenummer: 11183394.3
(22) Anmeldetag: 30.09.2011
(51) Int. Cl.: F24J 2/52

(54) **Tragschiene für Solarpaneele**
Support rail for solar panels
Rail de support pour panneaux solaires

(43) Veröffentlichungstag der Anmeldung: 03.04.2013
(73) Patentinhaber: HILTI Aktiengesellschaft, 9494 Schaan (LI)
(72) Erfinder: Schreiber, Gerald, 6800 Feldkirch (AT); Schwerdtfeger, Klaus, 6800 Feldkirch-Gisingen (AT)

(56) Entgegenhaltungen:
- WO-A1-03/098126
- DE-A1-102009 012 026
- DE-U1-202006 012 495
- DE-U1-202007 003 060
- DE-U1-202009 004 286
- DE-U1-202010 005 417
- DE-U1-202010 015 122

## Beschreibung

Die Erfindung betrifft eine Tragschiene zum Befestigen von Solarpaneelen, vorzugsweise Photovoltaikmodulen, an einer, vorzugsweise gewellten, Dachstruktur, beispielsweise einem Trapezdach, gemäss dem Oberbegriff des Anspruchs 1. Eine solche Tragschiene ist ausgestattet mit einer Grundplatte zur Auflage auf der Dachstruktur, einer ersten Seitenwand, die von der Grundplatte vorsteht, einer zweiten Seitenwand, die von der Grundplatte vorsteht, wobei zwischen den beiden Seitenwänden ein Aufnahmeraum für ein Befestigungselement gebildet ist, einem ersten Haltesteg, der von der ersten Seitenwand zur zweiten Seitenwand hin vorsteht, und einem zweiten Haltesteg, der von der zweiten Seitenwand zur ersten Seitenwand hin vorsteht, wobei zwischen den beiden Haltestegen eine Montageöffnung zum Einführen des Befestigungselementes in den Aufnahmeraum gebildet ist, und wobei die beiden Haltestege jeweils einen Hinterschnitt zum formschlüssigen Festlegen des Befestigungselementes im Aufnahmeraum bilden, wobei die Seitenwände einen Stabilisierungsbereich aufweisen, in dem die beiden Seitenwände im Querschnitt der Tragschiene betrachtet schiefwinklig zueinander verlaufen, und in dem, im Querschnitt der Tragschiene betrachtet, der Abstand der beiden Seitenwände voneinander zur Grundplatte hin abnimmt, und wobei die Grundplatte einen ersten Halteflansch, einen Mittelbereich und einen zweiten Halteflansch aufweist, wobei die erste Seitenwand zwischen dem ersten Halteflansch und dem Mittelbereich von der Grundplatte vorsteht, und wobei die zweite Seitenwand zwischen dem Mittelbereich und dem zweiten Halteflansch von der Grundplatte vorsteht.

Eine Tragschiene ist beispielsweise aus der DE 10 2009 008 683 A1 bekannt. Sie weist einen Schienenkörper mit einem C-förmigen Querschnitt auf, der über eine Grundplatte und zwei Seitenwände definiert wird, die endseitig jeweils einen Haltesteg aufweisen. Die Haltestege bilden einen Hinterschnitt, an dem ein Befestigungselement, z.B. eine Hammerkopfschraube, formschlüssig festgelegt werden kann. Die Grundplatte steht seitlich über die Seitenwände über, so dass Halteflansche gebildet werden, über welche die Tragschiene an der Dachstruktur festlegbar ist.

Bei der Untersuchung solcher Tragschienen hat sich gezeigt, dass sich die Seitenwände bei übermässigen Zuglasten am Befestigungselement unter Umständen nach aussen hin aufbiegen können, mit der Folge, dass das Befestigungselement in unerwünschter Weise von der Tragschiene freigegeben wird.

Eine gattungsgegmässe Tragschiene ist aus der DE 20 2010 005417 U1 bekannt. Weitere Tragschienen gehen aus der DE 20 2010 015122 U1, DE 10 2009 012026 A1, der WO 03/098126 A1 und der DE 20 2006 012495 U1 hervor.

Aufgabe der Erfindung ist es, eine besonders zuverlässige und dabei konstruktiv einfache und kostengünstige Tragschiene anzugeben.

Die Aufgabe wird erfindungsgemäss durch eine Tragschiene mit den Merkmalen des Anspruchs 1 gelöst. Bevorzugte Ausführungsformen sind in den abhängigen Ansprüchen angegeben.

Erfindungsgemäss ist unter anderem vorgesehen, dass die Seitenwände einen Stabilisierungsbereich aufweisen, in dem die beiden Seitenwände im Querschnitt der Tragschiene betrachtet schiefwinklig zueinander verlaufen, und in dem, im Querschnitt der Tragschiene betrachtet, der Abstand der beiden Seitenwände voneinander zur Grundplatte hin, d.h. insbesondere mit abnehmendem Abstand von der Grundplatte und zunehmendem Anstand von den Haltestegen, abnimmt. In diesem Stabilisierungsbereich verlaufen die beiden Seitenwände im Querschnitt der Tragschiene betrachtet also nicht parallel, sondern schiefwinklig zueinander.

Die Erfindung hat erkannt, dass das unerwünschte Aufbiegen der Seitenwände, welches beim Stand der Technik unter Umständen auftreten kann, seine Ursache in Momenten haben kann, die im Bereich der Seitenwände entstehen. Die Erfindung hat weiter erkannt, dass diese Momente ihre Ursache darin haben können, dass sich beim Stand der Technik die beiden Seitenwände parallel zueinander und senkrecht zur Grundplatte erstrecken. Damit verlaufen die beiden Seitenwände beim Stand der Technik aber auch parallel zu Zugkraftvektoren, die senkrecht zur Grundplatte wirken. Da aber die Zugkräfte nun nicht unmittelbar an den Seitenwänden angreifen, sondern an den Haltestegen, die versetzt zu den Seitenwänden angeordnet sind, liegen beim genannten Stand der Technik die Achsen der Zugkraftvektoren stets ausserhalb der Seitenwände, was die Momente zur Folge haben kann.

Hier setzt die Erfindung an und sieht im Verlauf der Seitenwände einen Stabilisierungsbereich vor, in welchem die beiden Seitenwände im Querschnitt der Tragschiene betrachtet nicht parallel zueinander, sondern so schiefwinklig zueinander verlaufen, dass der Abstand der Seitenwände voneinander im Querschnitt der Tragschiene betrachtet zur Grundplatte hin, d.h. mit zunehmendem Abstand von den Haltestegen, abnimmt. Damit nähern sich die Seitenwände im Stabilisierungsbereich den Achsen der Zugkraftvektoren an, mit der Folge, dass die Momente, die zu einem unerwünschten Aufbiegen führen können, reduziert sind. Mit anderen Worten können durch die erfindungsgemässe Form der Krafteinleitungspunkt und der theoretische Drehpunkt in Zugrichtung auf einer Linie liegen, so dass sich statisch kein oder allenfalls ein sehr geringes Aufbiegemoment ergibt. Dadurch können bei gleichem Materialaufwand höhere Zugkräfte übertragen werden.

Soweit im Zusammenhang mit dieser Erfindung vom Abstand der Seitenwände oder vom Abstand der Haltestege die Rede ist, kann hierunter insbesondere ein Abstand verstanden werden, der in einer Ebene gemessen wird, die parallel zu einer Ebene verläuft, in der die Grundplatte liegt, und/oder es kann hierunter ein Abstand verstanden werden, der in einer Ebene gemessen wird, die parallel zu einer Ebene verläuft, in der die beiden Haltestege liegen. Unter einem schiefwinkligen Verlauf der beiden Seitenwände wird insbesondere verstanden, dass die Seitenwände im Querschnitt einen von 0° und von 90° verschiedenen Winkel einschliessen.

Besonders bevorzugt ist es, dass, im Querschnitt der Tragschiene betrachtet, der Abstand der Seitenwände im Stabilisierungsbereich bereichsweise kleiner ist als der, insbesondere parallel hierzu gemessene, Abstand der beiden Haltestege. Gemäss dieser Ausführungsform können die Achsen der Zugkraftvektoren die Seitenwände im Stabilisierungsbereich schneiden, so dass die für ein eventuelles Aufbiegen verantwortlichen Momente besonders wirkungsvoll reduziert sind.

Insbesondere kann die Erfindung bei offenen Tragschienen zum Einsatz kommen, also bei Tragschienen, bei denen die Grundplatte das einzige Element der Tragschiene ist, welches die beiden Seitenwände verbindet. Denn bei solchen offenen Schienen ist die Neigung zum Aufbiegen besonders gross. Demgemäss ist es besonders vorteilhaft, dass, im Querschnitt der Tragschiene betrachtet, der Aufnahmeraum ununterbrochen von den Haltestegen bis zur Grundplatte reicht.

Da erfindungsgemäss ein Aufbiegen besonders wirksam unterbunden ist, sind in der Regel auch ausserhalb des Aufnahmeraums keine zusätzlichen Stützelemente zum Abstützen der Seitenwände an der Grundplatte erforderlich. Demgemäss ist es besonders vorteilhaft, dass die erste Seitenwand im Querschnitt der Tragschiene betrachtet an genau einem zusammenhängenden Kontaktbereich mit der Grundplatte verbunden ist, und dass die zweite Seitenwand im Querschnitt der Tragschiene betrachtet an genau einem zusammenhängenden Kontaktbereich mit der Grundplatte verbunden ist. Mit anderen Worten sind die beiden Seitenwände als Aussenwände ausgebildet und/oder es stehen genau zwei Wände von der Grundplatte vor, nämlich die Seitenwände. Die beiden Seitenwände sind erfindungsgemäss beide an derselben Seite der Grundplatte angeordnet, insbesondere an deren Oberseite.

Unter anderem im Hinblick auf den konstruktiven Aufwand und die Kräfteeinleitung kann es vorteilhaft sein, dass im Stabilisierungsbereich zumindest eine der beiden Seitenwände im Querschnitt der Tragschiene betrachtet gerade verläuft. Vorzugsweise verlaufen dort beide Seitenwände im Querschnitt der Tragschiene betrachtet gerade. Demgemäss können die beiden Seitenwände im Stabilisierungsbereich V-förmig zueinander verlaufen.

Eine weitere bevorzugte Ausführungsform der Erfindung liegt darin, dass die Seitenwände zwischen dem Stabilisierungsbereich und der Grundplatte einen Lastverteilungsbereich aufweisen, in dem die beiden Seitenwände im Querschnitt der Tragschiene betrachtet schiefwinklig zueinander verlaufen, und in dem, im Querschnitt der Tragschiene betrachtet, der Abstand der beiden Seitenwände voneinander zur Grundplatte hin wieder zunimmt. Gemäss dieser Ausführungsform ist zwischen Stabilisierungsbereich und Grundplatte ein weiterer funktionaler Bereich, nämlich der Lastverteilungsbereich vorgesehen, in dem sich die Seitenwände, die sich im Stabilisierungsbereich zur Grundplatte hin annähern, weiter zur Grundplatte hin wieder aufweiten. Durch den Lastverteilungsbereich kann eine besonders gleichmässige Zugkrafteinleitung aus den Seitenwänden in die Grundplatte erreicht werden, was insbesondere dann vorteilhaft ist, wenn die Tragschiene in ihrem Querschnitt betrachtet an zwei oder mehreren beabstandeten Befestigungspunkten mit der darunterliegenden Dachstruktur verbunden wird. Eine punktuelle Belastung der Grundplatte wird somit vermieden, so dass bei besonders geringem Aufwand besonders gute Lastwerte erhalten werden können. Die erfindungsgemässe Tragschiene kann dadurch weitergebildet sein, dass der maximale Abstand der Seitenwände im Lastverteilungsbereich kleiner ist als der maximale Abstand der Seitenwände im Stabilisierungsbereich, wodurch die Krafteinleitung und die Anbindung des Befestigungselementes noch weiter verbessert werden können.

Unter anderem im Hinblick auf den konstruktiven Aufwand und die Kräfteeinleitung kann es vorteilhaft sein, dass im Lastverteilungsbereich zumindest eine der beiden Seitenwände im Querschnitt der Tragschiene betrachtet gerade verläuft. Vorzugsweise verlaufen dort beide Seitenwände im Querschnitt der Tragschiene betrachtet gerade. Demgemäss können die beiden Seitenwände auch im Lastverteilungsbereich V-förmig zueinander verlaufen, und zwar insbesondere verglichen mit dem Stabilisierungsbereich umgekehrt V-förmig.

Grundsätzlich kann vorgesehen sein, dass zwischen dem Stabilisierungsbereich und dem Lastverteilungsbereich ein Zwischenbereich vorgesehen ist, in dem die Seitenwände parallel zueinander verlaufen. Besonders bevorzugt ist es jedoch, dass sich der Lastverteilungsbereich unmittelbar an den Stabilisierungsbereich anschliesst. Hierdurch kann die Kraftübertragung noch weiter verbessert werden, insbesondere indem Kräftevektoren flacher zu den Seitenwänden verlaufen.

Nach der Erfindung ist vorgesehen, dass die Grundplatte einen ersten Halteflansch, einen Mittelbereich und einen zweiten Halteflansch aufweist, wobei die erste Seitenwand zwischen dem ersten Halteflansch und dem Mittelbereich von der Grundplatte vorsteht, und wobei die zweite Seitenwand zwischen dem Mittelbereich und dem zweiten Halteflansch von der Grundplatte vorsteht. Demgemäss weist die Grundplatte zwei Halteflansche auf, mit denen die Grundplatte aussenseitig über die Seitenwände vorsteht. Die Grundplatte ist somit, im Querschnitt der Tragschiene betrachtet, über die beiden Seitenwände hinaus verbreitert. Hierdurch kann eine besonders gute Kraftübertragung zwischen der Tragschiene und der darunterliegenden Dachstruktur erhalten werden. Die beiden Halteflansche und der Mittelbereich der Grundplatte liegen vorzugsweise zumindest bereichsweise in einer gemeinsamen Ebene. Erfindungsgemäss wird der Aufnahmeraum von den Seitenwänden, den Haltestegen und der Grundplatte, insbesondere vom Mittelbereich der Grundplatte, begrenzt.

Ein weiterer Aspekt der Erfindung liegt darin, dass die Tragschiene zumindest einen mittleren Befestigungsbolzen aufweist, welcher die Grundplatte im Mittelbereich der Grundplatte durchdringt. Hierdurch kann die Kraftübertragung zwischen der Tragschiene und der darunterliegenden Dachstruktur weiter verbessert werde. Im Zusammenhang mit einem solchen mittleren Befestigungsbolzen ist insbesondere der erfindungsgemässe Lastverteilungsbereich vorteilhaft, da er den notwendigen Raum für einen solchen Bolzen zur Verfügung stellen kann.

Es ist bevorzugt, dass die Tragschiene zumindest einen aussenliegenden Befestigungsbolzen aufweist, welcher die Grundplatte im ersten Halteflansch oder im zweiten Halteflansch der Grundplatte durchdringt. Hierdurch kann die Anbindung an die Dachstruktur weiter verbessert werden. Insbesondere kann vorgesehen sein, dass sowohl mittlere Befestigungsbolzen im Mittelbereich als auch aussenliegende Befestigungsbolzen sowohl im ersten Halteflansch als auch im zweiten Halteflansch vorhanden sind. Hierdurch werden drei verschiedenartige Anbindungen zwischen Tragschiene und Dachstruktur geschaffen, was für eine besonders zuverlässige Anbindung sorgt. Der erfindungsgemässe Lastverteilungsbereich kann dabei sicherstellen, dass die verschiedenen Befestigungsbolzen gleichmässig belastet sind.

Bei den erfindungsgemässen Befestigungsbolzen kann es sich insbesondere um Befestigungsschrauben, grundsätzlich aber auch um Nieten handeln.

Eine andere vorteilhafte Weiterbildung der Erfindung besteht darin, dass in der Grundplatte in Längsrichtung der Tragschiene verlaufende Positionierungsnuten für Befestigungsschrauben vorgesehen sind. Hierdurch kann der Montageaufwand weiter reduziert werden. Besonders vorteilhaft ist es, dass eine mittlere Positionierungsnut im Mittelbereich, eine erste aussenseitige Positionierungsnut im ersten Halteflansch und eine zweite aussenseitige Positionierungsnut im zweiten Halteflansch angeordnet ist.

Weiterhin ist es zweckmässig, dass die Seitenwände einen Aufnahmebereich für das Befestigungselement aufweisen, in dem, im Querschnitt der Tragschiene betrachtet, die beiden Seitenwände parallel zueinander verlaufen. Dieser Aufnahmebereich kann insbesondere an den der Grundplatte abgewandten Enden der Seitenwände ausgebildet sein. Demgemäss kann sich erfindungsgemäss der Stabilisierungsbereich zwischen dem Lastverteilungsbereich und dem Aufnahmebereich befinden. In einem erfindungsgemässen Aufnahmebereich können die Befestigungselemente besonders zuverlässig festgelegt werden.

Eine besonders kompakte Anordnung kann dadurch erhalten werden, dass der erste Haltesteg am Ende der ersten Seitenwand angeordnet ist, und dass der zweite Haltesteg am Ende der zweiten Seitenwand angeordnet ist, wobei unter diesen Enden insbesondere die der Grundplatte abgewandten Enden verstanden werden können.

Besonders bevorzugt ist es überdies, dass an der ersten Seitenwand, zwischen dem ersten Haltesteg und der Grundplatte, ein erster Positionierungssteg angeordnet ist, welcher zur zweiten Seitenwand hin vorsteht, und/oder dass an der zweiten Seitenwand, zwischen dem zweiten Haltesteg und der Grundplatte, ein zweiter Positionierungssteg angeordnet ist, welcher zur ersten Seitenwand hin vorsteht. Die Positionierungsstege können das Befestigungselement beim Einführen in den Aufnahmeraum positionieren und damit ein Verkanten verhindern. Insbesondere können die Positionierungsstege am Übergang zwischen Aufnahmebereich und Stabilisierungsbereich angeordnet sein. In diesem Fall können sie diesen Übergang zusätzlich stabilisieren und die Seitenwände somit noch besser aussteifen. Die Positionierungsstege und die Haltestege verlaufen zweckmässigerweise parallel zueinander.

Der Herstellungsaufwand kann erfindungsgemäss dadurch reduziert werden, dass die Tragschiene als Strangprofil und/oder mit in Längsrichtung gleichbleibendem Querschnitt ausgebildet ist. Auch ist es im Hinblick auf den Herstellungsaufwand vorteilhaft, dass die Seitenwände eine konstante Wandstärke aufweisen. Insbesondere kann vorgesehen sein, dass die Wandstärke der Seitenwände im jeweiligen Stabilisierungsbereich dieselbe ist wie im jeweiligen Lastverteilungsbereich und/oder im jeweiligen Aufnahmebereich.

Der konstruktive Aufwand kann dadurch reduziert werden, dass die Tragschiene im Querschnitt spiegelsymmetrisch ausgeführt ist.

Die Erfindung wird nachfolgend anhand bevorzugter Ausführungsbeispiele näher erläutert, die schematisch in den beiliegenden Figuren dargestellt sind. In den Figuren zeigen schematisch:
Figur 1: eine perspektivische Darstellung einer erfindungsgemässen Tragschiene; und
Figur 2: die Tragschiene aus Figur 1 im Querschnitt.

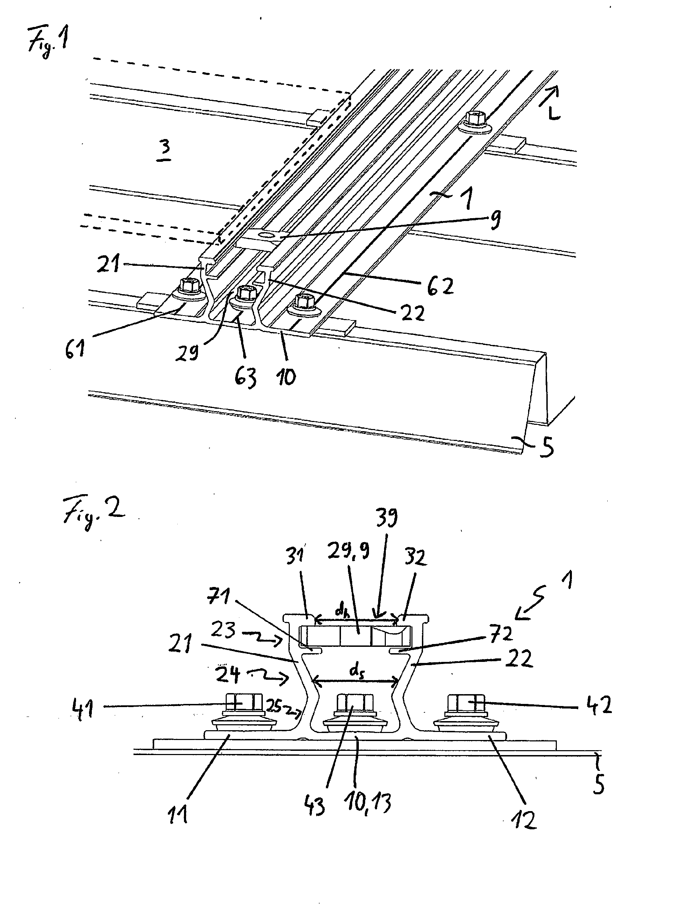

Die Figuren 1 und 2 zeigen unterschiedliche Ansichten eines Ausführungsbeispiels einer erfindungsgemässen Tragschiene 1. Die Tragschiene 1 dient zum Befestigen eines der Übersichtlichkeit halber lediglich schematisch und in Strichlinien dargestellten Solarpaneels 3 an einer Dachstruktur 5, welche in den Figuren beispielhaft als Trapezdach dargestellt ist. Die Tragschiene 1 weist einen in ihrer Längsrichtung L gleichbleibenden Querschnitt auf.

Die Tragschiene 1 weist eine annähernd ebene Grundplatte 10 auf, mit der sie auf der Dachstruktur 5 aufliegt. Ferner weist sie zwei Seitenwände 21 und 22 auf, die von dieser Grundplatte 10 winklig vorstehen. Die beiden Seitenwände 21 und 22 unterteilen die Grundplatte in zwei aussenliegende Halteflansche 11, 12 und einen Mittelbereich 13. Der Mittelbereich 13 der Grundplatte 10 verläuft zwischen den beiden Seitenwänden 21 und 22. Der erste Halteflansch 11 der Grundplatte 10 befindet sich auf der dem Mittelbereich 13 abgewandten Seite der ersten Seitenwand 21, wohingegen sich der zweite Halteflansch 12 der Grundplatte 10 auf der dem Mittelbereich 13 abgewandten Seite der zweiten Seitenwand 22 befindet. Die beiden Flansche 11, 12 und der Mittelbereich 13 sind in einer gemeinsamen Ebene angeordnet.

Die Tragschiene 1 ist mittels als Befestigungsschrauben ausgebildeten Befestigungsbolzen 41, 42, 43 an der Dachstruktur 5 gesichert. Diese Befestigungsbolzen 41, 42, 43 durchdringen die Grundplatte 10 und die Dachstruktur 5. Dabei sind mittlere Befestigungsbolzen 43 vorgesehen, die im Mittelbereich 13 der Grundplatte 10 angeordnet sind, sowie erste aussenliegende Befestigungsbolzen 41, die im ersten Halteflansch 11 der Grundplatte 10 angeordnet sind, und zweite aussenliegende Befestigungsbolzen 42, die im zweiten Halteflansch 12 der Grundplatte 10 angeordnet sind. Zum leichteren Einbringen der Befestigungsbolzen 41, 42, 43, insbesondere von selbstschneidenden Befestigungsbolzen 41, 42, 43, sind in der Grundplatte 10 auf ihrer der Dachstruktur 5 abgewandten, d.h. den Seitenwänden 21, 22 zugewandten Oberseite Positionierungsnuten 61, 62 und 63 vorgesehen, die sich in Längsrichtung L der Tragschiene 1 erstrecken. Eine erste Positionierungsnut 61 verläuft dabei im ersten Halteflansch 11, eine zweite Positionierungsnut 61 im zweiten Halteflansch 12 und eine mittlere Positionierungsnut 63 im Mittelbereich 13.

An der ersten Seitenwand 21, an ihrem der Grundplatte 10 abgewandten Ende, ist ein erster, in Längsrichtung L verlaufender Haltesteg 31 angeordnet. Ebenso ist an der zweiten Seitenwand 22, an ihrem der Grundplatte 10 abgewandten Ende, ein zweiter, in Längsrichtung L verlaufender Haltesteg 32 vorgesehen. Die beiden Haltestege 31 und 32 verlaufen in einer zur Ebene der Grundplatte 10 parallel verlaufenden Ebene, wobei sich der erste Haltesteg 31 zur zweiten Seitenwand 22 hin erstreckt, und der zweite Haltesteg 32 zur ersten Seitenwand 21 hin. Zwischen den beiden Haltestegen 31 und 32 ist eine in Längsrichtung L der Tragschiene 1 verlaufende Montageöffnung 39 gebildet, die von der Tragschienenaussenseite in einen Aufnahmeraum 29 führt, welcher zwischen den beiden Seitenwänden 21 und 22 gebildet ist. Über diese Montageöffnung 39 kann ein Befestigungselement 9 für die Solarpaneele 3, beispielsweise der Kopf einer Hammerkopfschraube, von aussen in den Aufnahmeraum 29 eingebracht werden. Die Haltestege 31 und 32 bilden zwei in Längsrichtung L verlaufende Hinterschnitte, an denen das in den Aufnahmeraum 29 eingeführte Befestigungselement 9 durch Drehen um eine senkrecht zur Ebene der Grundplatte 10 verlaufende Drehachse formschlüssig festgelegt werden kann.

Wie in Figur 1 angedeutet ist, liegen die an der Tragschiene 1 festgelegten Solarpaneele 3 auf den Stirnseiten der Seitenwände 21, 22 und/oder auf den Haltestegen 31, 32 auf.

In Bereich ihrer der Grundplatte 10 abgewandten Enden bilden die beiden Seitenwände 21 und 22 einen Aufnahmebereich 23. Dieser Aufnahmebereich 23 dient zur Aufnahme des Befestigungselementes 9. Der Aufnahmebereich 23 wird einerseits, nämlich oben, durch die beiden Haltestege 31 und 32 begrenzt. Andererseits, nämlich unten, wird der Aufnahmebereich durch zwei Positionierungsstege 71 und 72 begrenzt, die in den Aufnahmeraum 29 hineinragen, und die beispielsweise ein Verkanten des Befestigungselementes 9 verhindern können. Im Aufnahmebereich 23 verlaufen die beiden Seitenwände 21 und 22 parallel zueinander, d.h. ihr Abstand dₛ, gemessen im Querschnitt der Tragschiene 1 und in einer parallel zur Ebene der Grundplatte 10 und/oder in einer parallel zur Ebene der Haltestege 31, 32 verlaufenden Ebene, bleibt mit zunehmendem Abstand von den Haltestegen 31, 32, d.h. zur Grundplatte 10 hin, konstant.

Im Anschluss an den Aufnahmebereich 23 bilden die beiden Seitenwände 21 und 22 einen Stabilisierungsbereich 24. In diesem Stabilisierungsbereich 24 verlaufen die beiden Seitenwände 21 und 22 so schiefwinklig zueinander, dass ihr Abstand dₛ, gemessen im Querschnitt der Tragschiene 1 und in einer parallel zur Ebene der Grundplatte 10 und/oder in einer parallel zur Ebene der Haltestege 31, 32 verlaufenden Ebene, mit zunehmendem Abstand von den Haltestegen 31, 32, d.h. zur Grundplatte 10 hin, abnimmt. Der minimale Abstand dₛ, min der beiden Seitenwände 21 und 22 im Stabilisierungsbereich 24 ist dabei kleiner als der parallel hierzu gemessene Abstand dₕ der beiden Haltestege 31 und 32. Der Stabilisierungsbereich 24, in dem die beiden Seitenwände 21 und 22 im Querschnitt V-förmig verlaufen, reduziert unerwünschte Aufbiegemomente in den beiden Seitenwände 21 und 22.

Im Anschluss an den Stabilisierungsbereich 24 bilden die beiden Seitenwände 21 und 22 einen Lastverteilungsbereich 25. Im Lastverteilungsbereich 25, der sich zwischen dem Stabilisierungsbereich 24 und der Grundplatte 10 befindet, verlaufen die beiden Seitenwände 21 und 22 erneut schiefwinklig zueinander, allerdings in der Art und Weise, dass ihr Abstand dₛ, gemessen im Querschnitt der Tragschiene 1 und in einer parallel zur Ebene der Grundplatte 10 und/oder in einer parallel zur Ebene der Haltestege 31, 32 verlaufenden Ebene, mit zunehmendem Abstand von den Haltestegen 31, 32, d.h. zur Grundplatte 10 hin, wieder zunimmt. Der Lastverteilungsbereich 25 sorgt für eine gleichmässige Belastung aller drei Befestigungsbolzen 41, 42 und 43.

Im Aufnahmebereich 23, im Stabilisierungsbereich 24 und im Lastverteilungsbereich 25 weisen die Seitenwände 21 und 22 jeweils eine konstante Wandstärke auf. Im Aufnahmebereich 23 ist der Abstand dₛ der beiden Seitenwände 21 und 22 grösser als im Lastverteilungsbereich 25.

## Patentansprüche

1. Tragschiene (1) zum Befestigen von Solarpaneelen (3) an einer Dachstruktur (5), mit einer Grundplatte (10) zur Auflage auf der Dachstruktur (5),
einer ersten Seitenwand (22), die von der Grundplatte (10) vorsteht,
einer zweiten Seitenwand (22), die von der Grundplatte (10) vorsteht,
wobei zwischen den beiden Seitenwänden (21, 22) ein Aufnahmeraum (29) für ein Befestigungselement (9) gebildet ist,
einem ersten Haltesteg (31), der von der ersten Seitenwand (21) zur zweiten Seitenwand (22) hin vorsteht, und
einem zweiten Haltesteg (32), der von der zweiten Seitenwand (22) zur ersten Seitenwand (21) hin vorsteht,
wobei zwischen den beiden Haltestegen (31, 32) eine Montageöffnung (39) zum Einführen des Befestigungselementes (9) in den Aufnahmeraum (29) gebildet ist, und wobei die beiden Haltestege (31, 32) jeweils einen Hinterschnitt zum formschlüssigen Festlegen des Befestigungselementes (9) im Aufnahmeraum (29) bilden,
wobei die Seitenwände (21, 22) einen Stabilisierungsbereich (24) aufweisen, in dem die beiden Seitenwände (21, 22) im Querschnitt der Tragschiene (1) betrachtet schiefwinklig zueinander verlaufen, und in dem, im Querschnitt der Tragschiene (1) betrachtet, der Abstand (dₛ) der beiden Seitenwände (21, 22) voneinander zur Grundplatte (10) hin abnimmt,
und wobei die Grundplatte (10) einen ersten Halteflansch (11), einen Mittelbereich (13) und einen zweiten Halteflansch (12) aufweist, wobei die erste Seitenwand (21) zwischen dem ersten Halteflansch (11) und dem Mittelbereich (13) von der Grundplatte (10) vorsteht, und wobei die zweite Seitenwand (22) zwischen dem Mittelbereich (13) und dem zweiten Halteflansch (12) von der Grundplatte (10) vorsteht,
**dadurch gekennzeichnet,**
**dass** die Tragschiene (1) zumindest einen mittleren Befestigungsbolzen (43) aufweist, welcher die Grundplatte (10) im Mittelbereich (13) der Grundplatte (10) durchdringt.

2. Tragschiene (1) nach Anspruch 1,
**dadurch gekennzeichnet,**
**dass**, im Querschnitt der Tragschiene (1) betrachtet, der Abstand (dₛ) der Seitenwände (21, 22) im Stabilisierungsbereich (24) bereichsweise kleiner ist als der Abstand (dₕ) der beiden Haltestege (31, 32).

3. Tragschiene (1) nach einem der vorstehenden Ansprüche,
**dadurch gekennzeichnet,**
**dass**, im Querschnitt der Tragschiene (1) betrachtet, der Aufnahmeraum (29) ununterbrochen von den Haltestegen (31, 32) bis zur Grundplatte (10) reicht.

4. Tragschiene (1) nach einem der vorstehenden Ansprüche,
**dadurch gekennzeichnet,**
**dass** im Stabilisierungsbereich (24) zumindest eine der beiden Seitenwände (21, 22) im Querschnitt der Tragschiene (1) betrachtet gerade verläuft.

5. Tragschiene (1) nach einem der vorstehenden Ansprüche,
**dadurch gekennzeichnet,**
**dass** die Seitenwände (21, 22) zwischen dem Stabilisierungsbereich (24) und der Grundplatte (10) einen Lastverteilungsbereich (25) aufweisen, in dem die beiden Seitenwände (21, 22) im Querschnitt der Tragschiene (1) betrachtet schiefwinklig zueinander verlaufen, und in dem, im Querschnitt der Tragschiene (1) betrachtet, der Abstand (dₛ) der beiden Seitenwände (21, 22) voneinander zur Grundplatte (10) hin wieder zunimmt.

6. Tragschiene (1) nach Anspruch 5,
**dadurch gekennzeichnet,**
**dass** im Lastverteilungsbereich (25) zumindest eine der beiden Seitenwände (21, 22) im Querschnitt der Tragschiene (1) betrachtet gerade verläuft.

7. Tragschiene (1) nach Anspruch 5 oder 6,
**dadurch gekennzeichnet,**
**dass** sich der Lastverteilungsbereich (25) unmittelbar an den Stabilisierungsbereich (24) anschliesst.

8. Tragschiene (1) nach einem der vorstehenden Ansprüche,
**dadurch gekennzeichnet,**
**dass** sie zumindest einen aussenliegenden Befestigungsbolzen (41, 42) aufweist, welcher die Grundplatte (10) im ersten Halteflansch (11) oder im zweiten Halteflansch (12) der Grundplatte (10) durchdringt.

9. Tragschiene (1) nach einem der vorstehenden Ansprüche,
**dadurch gekennzeichnet,**
**dass** in der Grundplatte (10) in Längsrichtung der Tragschiene (1) verlaufende Positionierungsnuten (61, 62, 63) für Befestigungsschrauben (41, 42, 43) vorgesehen sind, wobei eine mittlere Positionierungsnut (63) im Mittelbereich (13), eine erste aussenseitige Positionierungsnut (61) im ersten Halteflansch (11) und eine zweite aussenseitige Positionierungsnut (62) im zweiten Halteflansch (12) angeordnet ist.

10. Tragschiene (1) nach einem der vorstehenden Ansprüche,
**dadurch gekennzeichnet,**
**dass** die Seitenwände (21, 22) einen Aufnahmebereich (23) für das Befestigungselement (9) aufweisen, in dem, im Querschnitt der Tragschiene (1) betrachtet, die beiden Seitenwände (21, 22) parallel zueinander verlaufen.

11. Tragschiene (1) nach einem der vorstehenden Ansprüche,
**dadurch gekennzeichnet,**
**dass** der erste Haltesteg (31) am Ende der ersten Seitenwand (21) angeordnet ist, und dass der zweite Haltesteg (32) am Ende der zweiten Seitenwand (22) angeordnet ist.

12. Tragschiene (1) nach einem der vorstehenden Ansprüche,
**dadurch gekennzeichnet,**
**dass** an der ersten Seitenwand (21), zwischen dem ersten Haltesteg (31) und der Grundplatte (10), ein erster Positionierungssteg (71) angeordnet ist, welcher zur zweiten Seitenwand (22) hin vorsteht, und/oder dass an der zweiten Seitenwand (22), zwischen dem zweiten Haltesteg (32) und der Grundplatte (10), ein zweiter Positionierungssteg (72) angeordnet ist, welcher zur ersten Seitenwand (21) hin vorsteht.

13. Tragschiene (1) nach einem der vorstehenden Ansprüche,
**dadurch gekennzeichnet,**
**dass** sie als Strangprofil mit in Längsrichtung gleichbleibendem Querschnitt ausgebildet ist, und
**dass** sie im Querschnitt spiegelsymmetrisch ausgeführt ist.

## Claims

1. Support rail (1) for fastening solar panels (3) to a roof structure (5), having a base plate (10) for placement on the roof structure (5), a first side wall (21) which projects from the base plate (10), a second side wall (22) which projects from the base plate (10), wherein a receptacle space (29) for a fastening element (9) is provided between the two side walls (21, 22), a first retaining web (31) which projects from the first side wall (21) toward the second side wall (22) and a second retaining web (32) which projects from the second side wall (22) toward the first side wall (21), wherein a mounting opening (39) is provided between the two retaining webs (31, 32) for introducing the fastening element (9) into the receptacle space (29) and wherein the two retaining webs (31, 32) each form an undercut for positively locking fixing of the fastening element (9) in the receptacle space (29), wherein the side walls (21, 22) have a stabilising region (24) in which the two side walls (21, 22), seen in cross-section through the support rail (1), extend at an angle to one another and in which, seen in cross-section through the support rail (1), the spacing (dₛ) of the two side walls (21, 22) from one another decreases toward the base plate (10), and wherein the base plate (10) has a first fixing flange (11), a central region (13) and a second fixing flange (12), wherein the first side wall (21) projects from the base plate (10) between the first fixing flange (11) and the central region (13) and wherein the second side wall (22) projects from the base plate (10) between the central region (13) and the second fixing flange (12), **characterised in that** the support rail (1) has at least one central fastening bolt (43) which penetrates the base plate (10) in the central region (13) of the base plate (10).

2. Support rail (1) according to claim 1, **characterised in that**, seen in cross-section through the support rail (1), the spacing (dₛ) of the side walls (21, 22) in the stabilising region (24) is smaller in some regions than the spacing (dₕ) of the two retaining webs (31, 32).

3. Support rail (1) according to one of the preceding claims, **characterised in that**, seen in cross-section through the support rail (1), the receptacle space (29) extends uninterrupted from the retaining webs (31, 32) to the base plate (10).

4. Support rail (1) according to one of the preceding claims, **characterised in that** in the stabilising region (24), seen in cross-section through the support rail (1), at least one of the two side walls (21, 22) extends straight.

5. Support rail (1) according to one of the preceding claims, **characterised in that**, between the stabilising region (24) and the base plate (10), the side walls (21, 22) have a load distribution region (25) in which, seen in cross-section through the support rail (1), the two side walls (21, 22) extend at an angle to one another and in which, seen in cross-section through the support rail (1), the spacing (dₛ) of the two side walls (21, 22) from one another increases again toward the base plate (10).

6. Support rail (1) according to claim 5, **characterised in that**, in the load distribution region (25), seen in cross-section through the support rail (1), at least one of the two side walls (21, 22) extends straight.

7. Support rail (1) according to claim 5 or 6, **characterised in that** the load distribution region (25) directly adjoins the stabilising region (24).

8. Support rail (1) according to one of the preceding claims, **characterised in that** said support rail has at least one externally situated fastening bolt (41, 42) which penetrates the base plate (10) in the first fixing flange (11) or in the second fixing flange (12) of the base plate (10).

9. Support rail (1) according to one of the preceding claims, **characterised in that** positioning grooves (61, 62, 63) extending in the longitudinal direction of the support rail (1) for fastening screws (41, 42, 43), wherein a central positioning groove (63) is arranged in the central region (13), a first exterior positioning groove (61) is arranged in the first fixing flange (11) and a second exterior positioning groove (62) is arranged in the second fixing flange (12).

10. Support rail (1) according to one of the preceding claims, **characterised in that** the side walls (21, 22) have a receptacle region (23) for the fastening element (9) in which, seen in cross-section through the support rail (1), the two side walls (21, 22) extend parallel to one another.

11. Support rail (1) according to one of the preceding claims, **characterised in that** the first retaining web (31) is arranged at the end of the first side wall (21) and that the second retaining web (32) is arranged at the end of the second side wall (22).

12. Support rail (1) according to one of the preceding claims, **characterised in that** arranged at the first side wall (21) between the first retaining web (31) and the base plate (10) is a first positioning web (71) which projects toward the second side wall (22) and/or that arranged at the second side wall (22) between the second retaining web (32) and the base plate (10) is a second positioning web (72) which projects toward the first side wall (21).

13. Support rail (1) according to one of the preceding claims, **characterised in that** said support rail is configured as an extruded profile with a cross-section which remains constant in the longitudinal direction and that said support rail is configured with mirror symmetry in cross-section.

## Revendications

1. Rail de support (1) pour la fixation de panneaux solaires (3) sur une structure de toit (5), comportant :
une plaque de base (10) pour venir en appui sur la structure de toit (5),
un premier flanc (22) faisant saillie à partir de la plaque de base (10),
un second flanc (22) faisant saillie à partir de la plaque de base (10),
dans lequel un espace de réception (29) pour un élément de fixation (9) est formé entre les deux flancs (21, 22),
une première nervure de retenue (31) faisant saillie à partir du premier flanc (21) vers le second flanc (22), et
une seconde nervure de retenue (32) faisant saillie à partir du second flanc (22) vers le premier flanc (21),
dans lequel une ouverture de montage (39) est formée entre les deux nervures de retenue (31, 32) afin d'introduire l'élément de fixation (9) dans l'espace de réception (29), et dans lequel les deux nervures de retenue (31, 32) forment respectivement une contre-dépouille pour bloqueur l'élément de fixation (9) dans l'espace de réception (29) par complémentarité de formes,
dans lequel les flancs (21, 22) comportent une zone de stabilisation (24) dans laquelle les deux flancs (21, 22) s'étendent en formant un angle oblique l'un par rapport à l'autre lorsque le rail de support (1) est vu en coupe transversale, et dans lequel, lorsque le rail de support (1) est vu en coupe transversale, la distance (dₛ) entre les deux flancs (21, 22) diminue jusqu'à la plaque de base (10),
et dans lequel la plaque de base (10) comporte une première bride de retenue (11), une zone centrale (13) et une seconde bride de retenue (12), dans lequel le premier flanc (21) fait saillie à partir de la plaque de base (10) entre la première bride de retenue (11) et la zone centrale (13), et dans lequel le second flanc (22) fait saillie à partir de la plaque de base (10) entre la zone centrale (13) et la seconde bride de retenue (12),
**caractérisé en ce que**
le rail de support (1) comporte au moins un boulon de fixation central (43) qui traverse la plaque de base (10) dans la zone centrale (13) de la plaque de base (10).

2. Rail de support (1) selon la revendication 1,
**caractérisé en ce que**
lorsque le rail de support (1) est vu en coupe transversale, la distance (dₛ) entre les flancs (21, 22) dans la zone de stabilisation (24) est, dans certaines zones, plus petite que la distance (dₕ) entre les deux nervures de retenue (31, 32).

3. Rail de support (1) selon l'une des revendications précédentes,
**caractérisé en ce que**
lorsque le rail de support (1) est vu en coupe transversale, l'espace de réception (29) s'étend jusqu'à la plaque de base (10) sans être interrompu par les nervures de retenue (31, 32) lorsque le rail de support (1) est vu en coupe transversale.

4. Rail de support (1) selon l'une des revendications précédentes,
**caractérisé en ce que**
dans la zone de stabilisation (24), au moins l'un des deux flancs (21, 22) s'étend de manière recti-ligne lorsque le rail de support (1) est vu en en coupe transversale.

5. Rail de support (1) selon l'une des revendications précédentes,
**caractérisé en ce que**
les flancs (21, 22) comportent une zone de répartition de charge (25) entre la zone de stabilisation (24) et la plaque de base (10), dans laquelle les deux flancs (21, 22), lorsque le rail de support (1) est vu en coupe transversale, s'étendent en formant un angle oblique l'un par rapport à l'autre, et dans laquelle, lorsque le rail de support (1) est vu en coupe transversale, la distance (dₛ) entre les deux flancs (21, 22) augmente de nouveau jusqu'à la plaque de base (10).

6. Rail de support (1) selon la revendication 5,
**caractérisé en ce que**
dans la zone de répartition de charge (25), au moins l'un des deux flancs (21, 22) s'étend de manière rectiligne lorsque le rail de support (1) est vu en coupe transversale.

7. Rail de support (1) selon la revendication 5 ou 6,
**caractérisé en ce que**
la zone de répartition de charge (25) est directement contigüe à la zone de stabilisation (24).

8. Rail de support (1) selon l'une des revendications précédentes,
**caractérisé en ce**
**qu'**il comporte au moins un boulon de fixation extérieur (41, 42) qui traverse la plaque de base (10) dans la première bride de retenue (11) ou dans la seconde bride de retenue (12) de la plaque de base (10).

9. Rail de support (1) selon l'une des revendications précédentes,
**caractérisé en ce que**
dans la plaque de base (10), des rainures de positionnement (61, 62, 63) pour des vis de fixation (41, 42, 43) sont prévues, qui s'étendent dans la direction longitudinale du rail de support (1), une rainure de positionnement centrale (61) étant agencée dans la zone centrale (13), une première rainure de positionnement côté extérieur (61) étant agencée dans la première bride de retenue (11) et une seconde rainure de positionnement côté extérieur (62) étant agencée dans la seconde bride de retenue (12).

10. Rail de support (1) selon l'une des revendications précédentes,
**caractérisé en ce que**
les flancs (21, 22) comportent une zone de réception (23) pour l'élément de fixation (9), dans laquelle, lorsque le rail de support (1) est vu en coupe transversale, les deux flancs (21, 22) s'étendent parallèlement l'un à l'autre.

11. Rail de support (1) selon l'une des revendications précédentes,
**caractérisé en ce que**
la première nervure de retenue (31) est agencée à l'extrémité du premier flanc (21), et **en ce que** la seconde nervure de retenue (32) est agencée à l'extrémité du second flanc (22).

12. Rail de support (1) selon l'une des revendications précédentes,
**caractérisé en ce que**
au niveau du premier flanc (21), entre la première nervure de retenue (31) et la plaque de base (10), est agencée une première nervure de positionnement (71) qui fait saillie vers le second flanc (22), et/ou **en ce que**, au niveaudu second flanc (22), entre la seconde nervure de retenue (32) et la plaque de base (10), est agencée une seconde nervure de positionnement (72) qui fait saillie vers le premier flanc (21).

13. Rail de support (1) selon l'une des revendictions précédentes,
**caractérisé en ce**
**qu'**il est formé comme un profilé extrudé ayant une section transversale constante dans la direction longitudinale, et
**qu'**il est réalisé de manière symétrique, en coupe transversale.
